# EUROPÄISCHE PATENTANMELDUNG

(11) **EP 4 187 413 A1**
(43) Veröffentlichungstag der Anmeldung: **31.05.2023**
(21) Anmeldenummer: 21210506.8
(22) Anmeldetag: 25.11.2021
(51) Int. Cl.: G06F 21/44

(54) **LEITSYSTEM FÜR EINE VERFAHRENSTECHNISCHE ANLAGE UND VERFAHREN ZUM ERSTELLEN EINER AUTOMATISIERUNG FÜR KOMPONENTEN EINER VERFAHRENSTECHNISCHEN ANLAGE**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(57) **Zusammenfassung**

Vorgeschlagen wird ein Verfahren zum Erstellen einer Automatisierung für Komponenten (1) einer verfahrenstechnischen Anlage, bei dem wenigstens einer Komponente (1) von einer Zertifizierungsstelle (10) der verfahrenstechnischen Anlage ein Zertifikat zugewiesen wird, welches der Komponente (1) ein Wechselwirken mit weiteren Komponenten der verfahrenstechnischen Anlage ermöglicht. Das Verfahren ist dadurch gekennzeichnet, dass in das Zertifikat Informationen (13) oder eine Referenz auf Informationen (13) eingefügt werden, welche Informationen (13) eine bestimmte Verwendung der Komponente (1) innerhalb der verfahrenstechnischen Anlage umfassen, um der Komponente (1) ausschließlich für die bestimmte Verwendung ein Wechselwirken mit weiteren Komponenten der verfahrenstechnischen Anlage zu ermöglichen.

## Beschreibung

Die Erfindung betrifft ein Leitsystem für eine verfahrenstechnische Anlage. Außerdem betrifft die Erfindung ein Verfahren zum Erstellen einer Automatisierung für Komponenten einer verfahrenstechnischen Anlage. Zudem betrifft die Erfindung die Verwendung eines Leitsystems zum Betrieb einer verfahrenstechnischen Anlage.

Aufgrund des (durch die zunehmende Verwendung von offenen IT-Standards und -Protokolle) steigenden Schutzbedarfs und der Anforderungen der IEC 62443 als des führenden Industrial Security Standards müssen die Kommunikationsverbindungen in Leitsystemen technischer Anlagen zunehmend abgesichert, d.h. gegen unberechtigte Zugriffe angemessen geschützt werden.

Ein angemessener Schutz kann insbesondere - je nach Ergebnissen einer sog. Threat and Risk Analyse (TRA) - die Verschlüsselung und/ oder die Authentifizierung der übertragenen Daten umfassen. Entsprechende Verschlüsselungs- und Authentifizierungsmechanismen sind in der Regel ein Bestandteil sicherer Kommunikationsprotokolle (wie z.B. TLS, OPC UA). Der Einsatz sicherer Kommunikationsprotokollen setzt voraus, dass die Kommunikationsteilnehmer über digitale Zertifikate verfügen.

Die Zertifikate, die in einer operativen Umgebung (wie z.B. einer industriellen Anlage) eingesetzt werden, um beispielsweise sichere Kommunikation oder Benutzerauthentifizierung zu ermöglichen, bezeichnet man in der Regel als sogenannte "operative Zertifikate" (engl. Operational Certificates, OC).

Aus Security-Gründen ist es empfehlenswert, ein dediziertes operatives Zertifikat pro verwendetes Kommunikationsprotokoll zu nutzen. Dies bedeutet, dass, falls eine Anlagenkomponente beispielsweise OPC UA zur Absicherung einer Kommunikationsbeziehung und TLS zur Absicherung einer anderen Kommunikationsbeziehung nutzt, die Komponente jeweils ein OPC UA-Zertifikat und ein TLS-Zertifikat benötigt (für die TLS-Server oder die TLS-Client-Authentifizierung). Ist die Menge von Anlagenkomponenten und somit der benötigten operativen Zertifikate klein, können die Zertifikate manuell in die Anlagenkomponenten importiert werden.

Mit einer steigenden Anzahl von Anlagenkomponenten, die in sichere Kommunikationsbeziehungen involviert sind und diverse Zertifikate benötigen, ist es sinnvoll, das Ausstellen von operativen Zertifikaten - basierend auf den von den Anlagenkomponenten generierten Zertifikatsanträgen (engl. Certificate Requests, CR) - sowie die Zuweisung der ausgestellten Zertifikate den Komponenten zu automatisieren. Ein derartiges automatisiertes Zertifikatsmanagement setzt in der Regel eine sog. Public Key Infrastruktur (PKI) voraus, die in der jeweiligen operativen Umgebung (z.B. einer industriellen Anlage) vorhanden sein soll.

Damit die Anlagenkomponenten sich mit den Komponenten der verwendeten Public Key Infrastruktur optimal "verständigen" können, werden in diesen Komponenten immer häufiger Zertifikatsmanagement-Protokolle wie z.B. das "Certificate Management Protocol (CMP)" nach RFC 4210 bzw. nach dem "Lightweight CMP Profile" implementiert. Unter Verwendung derartiger Protokolle können diverse Szenarien (wie beispielsweise initiale Beantragung eines operativen Zertifikats zu einem bestimmten Zweck oder die Beantragung einer Erneuerung eines zu einem bestimmten Zweck bereits vorhandenen operativen Zertifikats) unterschieden werden. Außerdem eignen sich derartige Protokolle dazu, verschiedene Arten von Zertifikaten zu beantragen, denn in den meisten Fällen ist es empfehlenswert, vor der Beantragung von applikationsspezifischen operativen Zertifikaten die Anlagenkomponenten mit den anlagengebundenen Kundenzertifikaten (engl. Customer Device Certificate, kurz: CDC), die die Komponenten an die Kundenanlage binden (wie ein Mitarbeiterausweis die Mitarbeiter an ein Unternehmen binden) auszustatten und diese dann als Basis für die Beantragung eines operativen Zertifikats zu nutzen.

Zertifikate bzw. die zugehörigen privaten Schlüssel (engl. Private Keys) sollten nach aktuellen Vorgaben / Empfehlungen (z.B. von NIST) regelmäßig (z.B. alle zwei Jahre) erneuert werden. Im Kontext eines automatisierten Zertifikatsmanagements bedeutet das, dass die Anlagenkomponenten die Erneuerung (beispielsweise über eine zentrale Registration Authority (RA)) bei einer Certification Authority (CA), die die zu erneuernden Zertifikate ausgestellt hat, beantragen, beispielsweise indem sie Zertifikatsanträge an sie übermitteln. Dazu sollen die Anlagenkomponenten fähig sein, zu überprüfen, ob die aktuelle Uhrzeit zwischen den im Zertifikat aufgeführten Zeitpunkten "Gültig ab" und "Gültig bis" liegt.

Aufgrund des Risikos möglicher Connectivity-Probleme und Time-Outs wird die Erneuerung eines Zertifikats in der Regel vorzeitig (beispielsweise einige Wochen vor dem Ablauf dieses Zertifikats) beantragt oder von einem Benutzer manuell (über ein administratives User Interface) vorgenommen. Das Ergebnis der Zertifikatserneuerung wird durch ein Zertifikat repräsentiert, welches sich in der Regel durch einen anderen öffentlichen Schlüssel und/oder einen anderen Gültigkeitszeitraum von dem ursprünglichen Zertifikat unterscheidet. Die wesentlichen Zertifikatsinhalte (insb. die Werte der Zertifikatsattribute "Antragsteller", "Aussteller", "Seriennummer", "Schlüsselverwendungszweck", "Erweiterter Schlüsselverwendungszweck") bleiben dabei unverändert.

Das Zertifikat wird in der Regel im Zertifikatsspeicher (engl. Certificate Store) der jeweiligen Anlagenkomponente abgelegt, und zwar normalerweise im Unterverzeichnis "Own". Somit befinden sich nach der erfolgreich durchgeführten Erneuerung mindestens zwei (fast) identische und überlappend gültige Zertifikate, die zum gleichen Verwendungszweck eingesetzt werden können im Verzeichnis "Own". Für den Fall, dass die Zertifikatserneuerung manuell durch einen Benutzer zu Testzwecken mehrfach wiederholt angestoßen wird, oder dass eine Anlagenkomponente aufgrund eines technischen Problems (z.B. eines Verbindungsproblems) ein beantragtes Zertifikat nicht innerhalb einer vorkonfigurierten Zeitspanne erhalten hat und somit die Erneuerung (ggf. mehrfach) wiederholt beantragt hat, können sogar mehrere identische, überlappend gültige Zertifikate, die sich nur durch unterschiedliche Gültigkeitszeiträume und unterschiedliche öffentliche Schlüssel voneinander unterscheiden unter "Own" abgelegt sein.

Dies kann sich, wie folgend dargelegt, nachteilig auswirken: Falls eine Anlagenkomponente ein Zertifikat zu einem bestimmten Verwendungszweck in ihrem Zertifikatsspeicher (unter "Own") - beispielsweise nach dem "Key Usage" bzw. "Extended Key Usage" - sucht, um beispielsweise ein Datenpaket, das sie an eine andere Anlagenkomponente übermitteln soll, zu signieren oder sich gegenüber einer anderen Anlagenkomponente zu authentifizieren, findet sie mehr als nur ein zu diesem dedizierten Zweck passendes Zertifikat. Die Suche nach diesem Zertifikat kann ggf. viel Zeit in Anspruch nehmen und die Performance der Anlagenkomponente beeinträchtigen. Außerdem wird der Zertifikatsspeicher der Anlagenkomponenten dadurch unnötigerweise überfüllt. Hierzu ist zu bedenken, dass die meisten industriellen IoT-Geräte (z.B. die sog. Industrial Edge Geräte) über einen sehr begrenzten Speicherplatz verfügen. Insbesondere aus diesem Grund sollen nur die notwendigen Zertifikate im Zertifikatsspeicher solcher Geräte abgelegt werden.

Überdies wird häufig fälschlicherweise davon ausgegangen, dass der Vorgang zur Erneuerung eines Zertifikats standardmäßig auch die Revokation des bestehenden Zertifikats beinhaltet bzw. nach sich zieht. Dies ist jedoch in der Regel nicht der Fall. Beispielsweise werden gemäß dem sog. Certificate

Management Protokoll (CMP) nach RFC 4210 zwei verschiedene Message- bzw. Antragstypen (Key Update Request, KUR, bzw. Revocation Request, RR) zur Beantragung der Zertifikatserneuerung bzw. der Zertifikatsrevokation samt der zugehörigen Response-Typen (Key Update Response, KUP, bzw. Revocation Response, RP) definiert, die in keinem direkten Zusammenhang miteinander stehen. Auch im Kontext des Zertifikatsmanagements unter Verwendung des sog. OPC UA Global Discovery Server (GDS) gemäß der OPC UA Spezifikation ist kein Revokationsantrag explizit vorgesehen.

Würde der Vorgang zur Erneuerung eines Zertifikats standardmäßig die sofortige Revokation des bestehenden Zertifikats beinhalten, würde dies bewirken, dass das bestehende Zertifikat, dessen Erneuerung eine Anlagenkomponente beantragt hat, gleich nach dem Ausstellen eines "Nachfolgers" durch die zuständige ausstellende Certification Authority (Issuing CA) revoziert werden würde, d.h. auf die Zertifikatssperrliste (Certificate Revocation List, CRL) der Issuing CA gesetzt werden würde. Falls die Zustellung des "Nachfolgers" an die betroffene Anlagenkomponente - meist über eine Registration Authority (RA) - erst mit einer Verzögerung erfolgt (was im industriellen Umfeld häufig der Fall ist), kann es somit passieren, dass das bestehende, im Zertifikatsspeicher der betroffenen Anlagenkomponente hinterlegte Zertifikat bereits ungültig ist (weil es auf der CRL der Issuing CA aufgeführt ist), sie jedoch noch über kein neueres Zertifikat verfügt.

Somit würde die Komponente im Rahmen der sicheren Kommunikation "unwissentlich" das revozierte und somit nicht mehr gültige Zertifikat verwenden, was ihrem Kommunikationspartner bei der Prüfung des Revokationsstatus (engl. Revocation Status Checking) im Rahmen der Zertifikatsvalidierung "auffallen" würde. Folglich würde der Kommunikationspartner den Kommunikationsvorgang verweigern, was zu Kommunikationsunterbrechungen und somit zur Gefährdung des Normalbetriebs und der Verfügbarkeit der industriellen Anlagen führen könnte.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Mehrzahl an Zertifizierungsstellen.

Der Erfindung liegt die Aufgabe zugrunde, ein Leitsystem für eine verfahrenstechnische Anlage und ein Verfahren zum Erstellen einer Automatisierung anzugeben, welche eine Modularisierung der verfahrenstechnischen Anlage effizienter gestalten.

Diese Aufgabe wird gelöst durch ein Verfahren zum Erstellen einer Automatisierung für Komponenten einer verfahrenstechnischen Anlage mit den Merkmalen des Anspruchs 1. Außerdem wird die Aufgabe gelöst durch ein Leitsystem für eine verfahrenstechnische Anlage mit den Merkmalen des Anspruchs 5. Zudem wird die Aufgabe gelöst durch eine Verwendung eines Leitsystems gemäß Anspruch 9. Vorteilhafte Weiterbildungen ergeben sich aus den abhängigen Ansprüchen.

Das erfindungsgemäße Verfahren zum Erstellen einer Automatisierung für Komponenten einer verfahrenstechnischen Anlage, bei dem wenigstens einer Komponente von einer Zertifizierungsstelle der verfahrenstechnischen Anlage ein Zertifikat zugewiesen wird, welches der Komponente ein Wechselwirken mit weiteren Komponente der verfahrenstechnischen Anlage ermöglicht, ist dadurch gekennzeichnet, dass das Engineering-Werkzeug dazu ausgebildet ist, in ein einer der Komponenten von einer Zertifizierungsstelle der verfahrenstechnischen Anlage zugewiesenes Zertifikat Informationen oder eine Referenz auf Informationen einzufügen, welche Informationen eine bestimmte Verwendung der Komponente innerhalb der verfahrenstechnischen Anlage umfassen, um der Komponente ausschließlich für die bestimmte Verwendung ein Wechselwirken mit weiteren Komponenten der verfahrenstechnischen Anlage zu ermöglichen. Bei der verfahrenstechnischen Anlage kann es sich um eine Anlage aus der Prozessindustrie wie beispielsweise eine chemische, pharmazeutische, petrochemische oder eine Anlage aus der Nahrungs- und Genussmittelindustrie handeln.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Das erfindungsgemäße Verfahren dient der Automatisierung komplexer Prozesse, die auf der verfahrenstechnischen Anlage ablaufen. Die verfahrenstechnische Anlage selbst umfasst eine Vielzahl von einzelnen Komponenten, deren komplexes Zusammenwirken im Rahmen der Erstellung / Erzeugung der Automatisierung koordiniert werden muss. Ein Aspekt des Zusammenwirkens ist die Kommunikation der einzelnen Komponenten miteinander, also der Austausch bzw. die Übertragung von Informationen. Um die Kommunikation manipulationssicher zu gestalten, werden Zertifikate zur Authentifizierung der einzelnen Komponenten verwendet. Dabei wird (wenigstens einer Komponente) von einer Zertifizierungsstelle (engl. Issuing Certification Authority) der verfahrenstechnischen Anlage ein Zertifikat erstellt und der Komponente zugewiesen. Mit diesem Zertifikat ist die Komponente dann in der Lage, mit anderen Komponenten innerhalb der verfahrenstechnischen Anlage in Wechselwirkung zu treten, also beispielsweise mit dieser Informationen auszutauschen.

Das erfindungsgemäße Verfahren ist dadurch gekennzeichnet, dass in das Zertifikat entweder direkt oder indirekt (über eine Referenz auf einen externen Ablageort) Informationen eingefügt werden, die eine bestimmte Verwendung der Komponente innerhalb der verfahrenstechnischen Anlage umfassen. Hierdurch ist festlegbar, dass die Komponente ausschließlich für die bestimmte Verwendung ein Wechselwirken mit weiteren Komponente der verfahrenstechnischen Anlage gestattet wird. Dadurch kann beispielsweise einfach und effektiv verhindert werden, dass eine Komponente nach dem Durchführen eines Prozessschrittes für einen beliebigen neuen Prozessschritt eingesetzt werden kann, was zu den im einleitenden Teil beschriebenen Folgen führen würde.

Durch das erfindungsgemäße Verfahren kann eine ungeregelte Verwendung / ein Austausch der Komponente bzw. von mehreren Komponenten der verfahrenstechnischen Anlage und den damit verbundenen Problemen (wie z.B. die Verunreinigung von Chargen) vorgebeugt werden. Speziell im Kontext von modularen Konzepten, bei denen einzelne Komponenten regelmäßig zur Herstellung verschiedenster Prozessergebnisse verwendet werden, stellt sich das zuvor beschriebene erfindungsgemäße Verfahren als besonders vorteilhaft dar. Durch das Verfahren kann zu einem Normalbetrieb und einer hohen Verfügbarkeit der verfahrenstechnischen Anlage als wichtigste Schutzziele hinsichtlich der Industrial Security beigetragen entscheidend werden.

Die Komponente kann eine sogenannte Package Unit darstellen. Diese umfasst eine Mehrzahl von Subkomponenten und kann im Rahmen einer Projektierung der verfahrenstechnischen Anlage als eine in sich abgeschlossene Einheit integriert werden. Mit anderen Worten stellt die Package Unit ein Modul dar, welches in der verfahrenstechnischen Anlage zur Durchführung eines oder mehrerer Prozessschritte verwendet werden kann. Dabei weist die Package Unit bereits eine vorher, beispielweise von einem Hersteller der Package Unit definierte Automatisierung/Projektierung auf. Um mit weiteren Komponenten der verfahrenstechnischen Anlagen (die auch weitere Package Units sein können) in Wechselwirkung treten zu können, wird der Package Unit ein Zertifikat zugewiesen, welches gemäß der Erfindung mit den zuvor erläuterten Informationen oder einer Referenz auf diese Informationen versehen wird. Es ist dabei zu erwähnen, dass nicht jede Subkomponente ein eigenes Zertifikat benötigt, sondern lediglich die übergeordnete Package Unit.

Die Verwendung kann eines oder mehrere von der Komponente bzw. der Package Unit herzustellenden Produkte betreffen. Die Information sagt dabei aus, dass die Komponente beispielsweise nur für die Herstellung des Produktes A oder des Zwischenproduktes Z verwendet werden darf. Die Verwendung kann sich auch auf einen oder mehrere, von der Komponente durchführbare verfahrenstechnische Dienste beziehen. Dabei handelt es sich bei den Diensten insbesondere um ein Rühren, ein Temperieren oder ein Mischen eines Stoffes. Die Verwendung kann sich auf einen definierten Teilbereich der verfahrenstechnischen Anlage beziehen. Die Verwendung kann sich auf die Kombination der Komponente mit weiteren Komponenten beziehen ("Komponente A darf mit den Komponenten C und D, nicht aber mit der Komponente B kombiniert werden"). Auch kann sich die Verwendung auf einen bestimmten Betriebsbereich beziehen, innerhalb dessen die Komponente betrieben werden darf ("Betrieb der Komponente A nur in einem Temperaturbereich von -20 bis +40 Grad Celsius").

Die Informationen, die die Verwendung der Komponente innerhalb der verfahrenstechnischen Anlage umfassen, können in einem Datenspeicher der verfahrenstechnischen Anlage oder in einer cloudbasierten Umgebung in oder außerhalb der verfahrenstechnischen Anlage befindlich sein, wobei in dem Zertifikat eine Referenz auf diese Informationen eingefügt ist. Die Informationen müssen nicht direkt in dem Zertifikat eingefügt werden, um die Größe des Zertifikats nicht übermäßig zu erhöhen. Hintergrund ist, dass viele Komponenten aktuell nur über einen beschränkten Zertifikatsspeicher verfügen, weshalb die Verwendung lediglich einer Referenz in dem Zertifikat besonders vorteilhaft ist. Darüber hinaus ist das zentral hinterlegte Zertifikat auch einfacher hinsichtlich einer Gültigkeit zu überwachen, um rechtzeitig eine Erneuerung oder eine Revokation des Zertifikats initiieren zu können.

Die zuvor formulierte Aufgabe wird zudem gelöst durch ein Leitsystem für eine verfahrenstechnische Anlage, welches einen Engineering Station Server umfasst, auf dem ein Engineering-Werkzeug computerimplementiert ist, welches zum Erstellen einer Automatisierung für Komponenten der verfahrenstechnischen Anlage ausgebildet und vorgesehen ist. Das Leitsystem ist dadurch gekennzeichnet, dass das Engineering-Werkzeug dazu ausgebildet ist, der Komponente ein Zertifikat auszustellen und in das Zertifikat Informationen oder eine Referenz auf Informationen einzufügen, welche Informationen eine bestimmte Verwendung der Komponente innerhalb der verfahrenstechnischen Anlage umfassen, um der Komponente ausschließlich für die bestimmte Verwendung ein Wechselwirken mit weiteren Komponenten der verfahrenstechnischen Anlage zu ermöglichen.

Das Engineering-Werkzeug agiert dabei als Zertifizierungsstelle, die das (Kunden-)Zertifikat für die Komponente ausstellt, welches der Komponente ein Wechselwirken mit weiteren Komponenten der verfahrenstechnischen Anlage ermöglicht.

Unter einem Leitsystem wird im vorliegenden Kontext ein computergestütztes, technisches System verstanden, das Funktionalitäten zum Darstellen, Bedienen und Leiten einer verfahrenstechnischen Anlage (Produktionsanlage) umfasst. Das Leitsystem kann auch Sensoren zur Ermittlung von Messwerten sowie verschiedene Aktoren umfassen. Zudem kann das Leitsystem sogenannte prozessnahe Komponenten umfassen, die zur Ansteuerung der Aktoren bzw. Sensoren dienen. Darüber kann das Leitsystem u.a. Mittel zur Visualisierung der technischen Anlage und zu einem Engineering aufweisen. Unter dem Begriff Leitsystem sind zusätzlich auch weitere Recheneinheiten für komplexere Regelungen und Systeme zur Datenspeicherung und - verarbeitung zu fassen.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering-Werkzeug) sowie vorgefertigten Bausteinen und Plänen kann mittels des Engineering Station Servers ein Zusammenspiel von Komponenten der verfahrenstechnischen Anlage geplant und verwaltet werden. Ein Beispiel hierfür ist ein SIMATIC Manager Server der Firma SIEMENS.

Das erfindungsgemäße Leitsystem stellt in besonders vorteilhafter Art und Weise sicher, dass in einem Zertifikat, welches einer Komponente der verfahrenstechnischen Anlage zugewiesen wird, eine Information (direkt oder indirekt) über eine bestimmte Verwendung der Komponente innerhalb der verfahrenstechnischen Anlage hinterlegt wird. Diese Funktionalität wird von dem Engineering-Werkzeug bereitgestellt, um zu garantieren, dass die Komponente nur dann für ein Wechselwirken mit weiteren Komponenten vorgesehen wird, wenn dies auch so vorgesehen ist.

Die Aufgabe wird zudem gelöst durch ein Leitsystem für eine verfahrenstechnische Anlage, welches einen Engineering Station Server umfasst, auf dem ein Engineering-Werkzeug computerimplementiert ist, welches zum Erstellen einer Automatisierung für Komponenten der verfahrenstechnischen Anlage ausgebildet und vorgesehen ist. Das Leitsystem ist dadurch gekennzeichnet, dass das Engineering-Werkzeug dazu ausgebildet ist, in einen von der Komponente zur Beantragung eines Zertifikats generierten Zertifikatsantrag Informationen oder eine Referenz auf Informationen einzufügen, welche Informationen eine bestimmte Verwendung der Komponente innerhalb der verfahrenstechnischen Anlage umfassen, um der Komponente anhand des, basierend auf dem Zertifikatsantrag von einer Zertifizierungsstelle der verfahrenstechnischen Anlage ausgestellten Zertifikats, das die im Zertifikatsantrag enthaltenen Informationen oder eine Referenz auf Informationen enthält, ausschließlich für die bestimmte Verwendung ein Wechselwirken mit weiteren Komponenten der verfahrenstechnischen Anlage zu ermöglichen.

Das Engineering-Werkzeug fungiert hierbei als eine Art Proxy bzw. ein Vermittler, welcher den Zertifikatsantrag der Komponente mit den vorteilhaften Informationen bzw. einer Referenz auf diese Informationen anreichert.

Im Rahmen einer vorteilhaften Weiterbildung der Erfindung stellt die Komponente eine Package Unit dar, die eine Mehrzahl von Subkomponenten umfasst und die im Rahmen einer Projektierung der verfahrenstechnischen Anlage als eine in sich abgeschlossene Einheit integriert werden kann.

Die bestimmte Verwendung kann eines oder mehrere von der Komponente herzustellende Produkte, oder einen oder mehrere, von der Komponente durchführbare verfahrenstechnische Dienste, insbesondere ein Rühren, Temperieren oder Mischen, und/oder einen bestimmten Betriebsbereich der Komponente betreffen. Die Informationen, die die Verwendung der Komponente innerhalb der verfahrenstechnischen Anlage umfassen, können in einem Datenspeicher der verfahrenstechnischen Anlage oder in einer cloudbasierten Umgebung in oder außerhalb der verfahrenstechnischen Anlage befindlich sein, wobei in dem Zertifikat eine Referenz auf diese Informationen eingefügt ist.

Die Aufgabe wird zudem gelöst durch die Verwendung eines Leitsystems wie zuvor erläutert zum Betrieb einer verfahrenstechnischen Anlage.

Bevorzugt werden bei der Verwendung im Rahmen eines Erstellens oder einer Überarbeitung einer Automatisierung für Komponenten einer verfahrenstechnischen Anlage bei einer beabsichtigten Verwendung einer der Komponenten in einem für die Komponente ausgestellten Zertifikat enthaltene Informationen oder eine Referenz auf Informationen dahingehend überprüft, ob eine bestimmte, im Rahmen der Automatisierung vorgesehene Verwendung der Komponente innerhalb der verfahrenstechnischen Anlage erlaubt ist, und bei der die Komponente für den Fall, dass die bestimmte Verwendung nicht erlaubt sein sollte, eine Verwendung der Komponente im Rahmen der Automatisierung verhindert wird.

Dies bedeutet, dass bei der Einbindung und Verwendung der Komponente (beispielsweise der Package Unit) stets eine Prüfung anhand des Kundenzertifikats bzw. der in diesem Zertifikat enthaltenen Information bzw. der Referenz auf diese Information, die eine bestimmte Verwendung der Komponente innerhalb der verfahrenstechnischen Anlage umfassen, erfolgt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein Objektmodell für Package Units; und
- FIG 2: ein Ablaufdiagramm einer profilverifizierenden Instanziierung einer Package Unit.

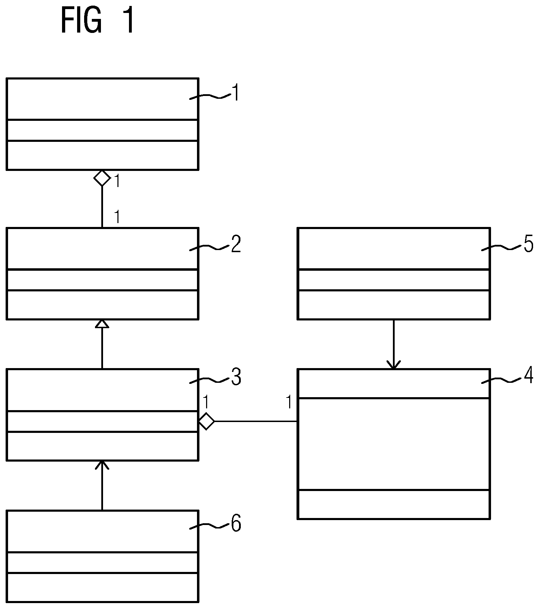

In FIG 1 ist ein Objektmodell für eine Package Unit 1 dargestellt. Bei der Package Unit 1 handelt es sich um eine übergeordnete Komponente, die eine Mehrzahl von Subkomponenten aufweist. Die Package Unit 1 ist von ihrem Hersteller mit einer Automatisierung versehen worden und verfügt über ein sogenanntes Herstellerzertifikat 2 (engl. Manufacturer Certificate oder kurz: MC), welches im Rahmen einer PKI-Infrastruktur einer verfahrenstechnischen Anlage zur Authentifizierung der Package Unit 1 verwendet werden kann.

Eine Zertifizierungsstelle der verfahrenstechnischen Anlage nutzt dabei das Herstellerzertifikat 2 zur Authentifizierung der Package Unit 2 und stellt im Fall einer erfolgreichen Authentifizierung ein Kundenzertifikat 3 für die Package Unit 1 aus. Das Kundenzertifikat 3 ist mit Informationen 4 oder einer Referenz auf Informationen 4 versehen, die eine bestimmte Verwendung der Package Unit 1 innerhalb der verfahrenstechnischen Anlage umfassen, um der Package Unit 1 ausschließlich für die bestimmte Verwendung ein Wechselwirken mit weiteren Komponenten der verfahrenstechnischen Anlage zu ermöglichen.

Das Kundenzertifikat 3 kann auf einem durch den Standard X.509 vorgegebenen Format beruhen und damit wenigstens eine eindeutige Identifikation, einen öffentlichen Schlüssel zu einem privaten Schlüssel, welcher in der Package Unit 1 sicher hinterlegt ist und eine Signatur der Zertifizierungsstelle als vertrauenswürdige Instanz, die das Kundenzertifikat ausgestellt und signiert hat, aufweisen. Die zusätzlichen, im Rahmen der vorliegenden Erfindung vorgesehenen Informationen 4 können als sogenannte Object Identifiers (OIDs) kodiert sein.

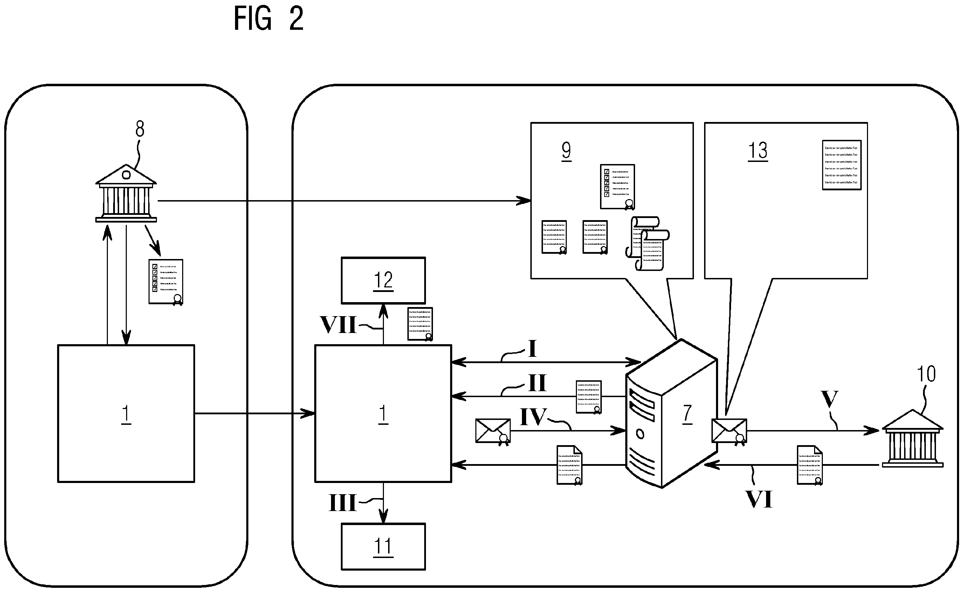

Ein Engineering-Werkzeug 5 hat lesenden und schreibenden Zugriff auf diese Informationen 4. Ein Laufzeit-Werkzeug 6 hat lesenden Zugriff auf das Kundenzertifikat 3 und auf die Informationen 4. Diese Zusammenhänge werden anhand der Beschreibung von FIG 2 näher erläutert. Die Informationen 4 können beispielsweise eine Produktkennung eines herzustellenden Produktes, zulässige verfahrenstechnische Dienste der Package Unit 1, bestimmte zulässige Anlagenbereiche oder einen Betriebsbereich der Package Unit 1 umfassen. Es sind aber weitere Verwendungslimitierungen möglich, die eine Package Unit 1 im Umfeld der verfahrenstechnischen Anlage betreffen können.

In FIG 2 ist der Ablauf einer Profilverifizierenden Instanziierung einer Package Unit 1 dargestellt. Es wird angenommen, dass die Package Unit 1 von einem Hersteller hergestellt sowie mit einer Automatisierung (Automatisierungscode) und einem Herstellerzertifikat versehen wurde. Ein Engineering Station Server 7 eines Leitsystem der verfahrenstechnischen Anlage weist ein computerimplementiertes Engineering-Werkzeug auf. Dieses Engineering-Werkzeug ist dazu ausgebildet und vorgesehen, eine Automatisierung/Projektierung der verfahrenstechnischen Anlage zu erzeugen. Hierzu ist eine automatisierungstechnische Konfiguration der Package Unit 1 in das Engineering-Werkzeug importierbar, insbesondere unter Nutzung des Modular Type Package Standards (MTP) für die Konfigurationsbeschreibung.

In einem ersten Schritt (I) der Integration der Package Unit 1 in das Engineering-Werkzeug wird eine Originalitätsprüfung des Herstellerzertifikats 2 (bzw. des OEM-Zertifikats) unter Verwendung eines gängigen Verfahrens (wie z.B. des Verfahrens gemäß der OPC UA-Spezifikation, wie im einleitenden Teil erläutert) vorgenommen. Dabei wird das Herstellerzertifikat/OEM-Zertifikat der Package Unit 1 anhand der vom Hersteller/OEM auf einem adäquaten Weg übermittelten/ bereitgestellten Daten 9 validiert. Dabei werden Zertifikate einer Zertifizierungsstelle 8 des Herstellers, Statusinformationen, z.B. in Form von den sog. Certificate Revocation Lists, kurz: CRL, sowie ggf. sogenannter Tickets mit relevanten Informationen zum Herstellerzertifikat/OEM-Zertifikat verwendet. Zudem prüft der Engineering Station Server 7, ob die Package Unit 1 den privaten Schlüssel (engl. Private Key) zum Herstellerzertifikat/OEM-Zertifikat kennt, ohne dass der private Schlüssel dabei preisgegeben wird.

In einem zweiten Schritt (II) hinterlegt der Engineering Station Server 7 unter Zuhilfenahme einer Zertifizierungsstelle 10 der verfahrenstechnischen Anlage ein Vertrauenszertifikat der Zertifizierungsstelle 10 auf der Package Unit 1 (bzw. genauer: weist dieses Vertrauenszertifikat der Package Unit 1 auf dem Engineering Station Server 7 digital zu), damit die Package Unit 1 im weiteren Verlauf mit weiteren Komponenten der verfahrenstechnischen Anlage wechselwirken, insbesondere kommunizieren kann. Die Package Unit 1 wird durch das o.g. "Vertrauenszertifikat der Zertifizierungsstelle" = "das Zertifikat der Root CA, welches als Vertrauensanker der betrachteten verfahrenstechnischen Anlage gilt", an die Anlage gebunden.

In einem dritten Schritt (III) erzeugt die Package Unit 1, beispielsweise durch eine in der Package Unit 1 integrierte Recheneinheit, einen privaten Schlüssel und einen dazugehörigen öffentlichen Schlüssel. Wenn die Package Unit 1 nicht über ausreichende Rechenkapazitäten hierfür verfügt, kann dieser Schritt stellvertretend auch von dem Engineering Station Server bzw. von dem hierauf implementierten Engineering-Werkzeug vorgenommen werden. Diese Funktionalität kann bei sogenannten "Constraint Devices" als Package Unit 1 notwendig sein, da diese selbst nicht in der Lage sind, einen Schlüssel bzw. ein Schlüsselpaar zu generieren. Die Package Unit 1 bzw. eine hierfür zuständige Software-Schnittstelle (API) triggert dieses Erzeugung der Schlüssel durch den Engineering Station Server bzw. das hierauf implementierte Engineering-Werkzeug. Der private Schlüssel der Package Unit 1 wird in einem sicheren, insbesondere hardwaregebundenen Schlüsselspeicher 11 (engl. Key Store) hinterlegt.

"Hardwaregebunden" bedeutet dabei, dass der Schlüssel in einem verwendeten Hardware-Secure Element wie einem FPGA (Field Programmable Gate Array), einem HSM (Hardware-Sicherheitsmodul) oder einem TPM (Trusted Platform Module) generiert und dort gespeichert/abgelegt wird. Die Hardware-Secure Elements verfügen in der Regel über einen hochqualitativen Pseudozufallszahlengenerator, so dass die generierten Schlüssel optimal gegen Brute Force/Erraten geschützt sind. Außerdem können derartige Hardware-Secure Elements einen adäquaten Schutz gegen das physikalische Auslesen der Schlüssel aufweisen. Beispielsweise kann der private Schlüssel beim Versuch, ihn auszulesen, zerstört werden.

In einem darauffolgenden Schritt (IV) wird entweder von der Package Unit 1 selbst oder durch den Engineering Station Server 7 bzw. das hierauf implementierte Engineering-Werkzeug ein Zertifikatsantrag an die Zertifizierungsstelle 10 gerichtet. Dieser wird mit dem zuvor erzeugten privaten Schlüssel signiert. Auch der dazugehörige öffentliche Schlüssel wird zum Bestandteil des Zertifikatsantrags.

Das Engineering-Werkzeug fügt dem Zertifikatsantrag Informationen 13 hinzu, die eine Verwendung der Package Unit 1 innerhalb der verfahrenstechnischen Anlage betreffen (wie zuvor erläutert), und übermittelt den erweiterten Zertifikatsantrag an die Zertifizierungsstelle 10 (V). Die Informationen 13 sind vorteilhafterweise gegen unbemerkte und unberechtigte Manipulationen geschützt, beispielsweise wiederum durch die Verwendung von Zertifikaten. Die Informationen 13 können sich während des Lebenszyklus der Package Unit 1 ändern. In diesem Fall wird ein neuer Zertifikatsantrag für neues, überarbeitetes Kundenzertifikat erzeugt.

In den darauffolgenden Schritten (VI und VII) wird das zu dem Zertifikatsantrag passende Kundenzertifikat erstellt, unter Berücksichtigung des in der Package Unit 1 hinterlegten Zertifikats der Zertifizierungsstelle 10 (Root CA) validiert und in einem Zertifikatsspeicher 12 der Package Unit 1 abgelegt. Dabei kann sich der Zertifikatsspeicher 12 in einem Speicherteil des Engineering Station Servers 7 oder eines übergeordneten Leitsystems oder in der "Cloud" befinden. Der Zertifikatsspeicher 12 ist dabei so ausgebildet, dass die Package Unit 1 auf das ausgestellte Kundenzertifikat und den zugehörigen, sicher abgelegten privaten Schlüssel stets zugreifen kann, um beispielsweise weitere Zertifikatsanträge unter Verwendung dieses Zertifikats zu signieren. Für die Validierung eines ausgestellten Zertifikats, das auch die Zertifikatskette bis zum Zertifikat der Zertifizierungsstelle 10 beinhaltet, wird nach dem Stand der Technik (z.B. nach dem RFC 5280) das lokal abgelegte Zertifikat der Zertifizierungsstelle 10 benötigt, damit ausgeschlossen werden kann, dass eine bösartige/manipulierte Zertifikatskette eingeschleust wird und sich eine zugehörige "böswillige" Zertifizierungsstelle, die das Zertifikat ausgestellt hat, sich als eine legitime Zertifizierungsstelle 10 ausgibt.

Bevor die Package Unit 1 zum Einsatz kommt, kann eine zusätzliche Sicherheitsvorkehrung vorgesehen sein: Die Laufzeit-Komponente 6, die gemäß FIG 1 einen Lesezugriff auf das Kundenzertifikat hat, kann die vergebenen Berechtigungen für die Package Unit 1 nochmals prüfen, bevor die Package Unit 1 tatsächlich in der verfahrenstechnischen Anlage zum Einsatz kommt. Im Erfolgsfall wird die Package Unit 1 daraufhin in einem Betrieb der verfahrenstechnischen Anlage verwendet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Erstellen einer Automatisierung für Komponenten (1) einer verfahrenstechnischen Anlage, bei dem wenigstens einer Komponente (1) von einer Zertifizierungsstelle (10) der verfahrenstechnischen Anlage ein Zertifikat zugewiesen wird, welches der Komponente (1) ein Wechselwirken mit weiteren Komponenten der verfahrenstechnischen Anlage ermöglicht,
**dadurch gekennzeichnet, dass**
in das Zertifikat Informationen (13) oder eine Referenz auf Informationen (13) eingefügt werden, welche Informationen (13) eine bestimmte Verwendung der Komponente (1) innerhalb der verfahrenstechnischen Anlage umfassen, um der Komponente (1) ausschließlich für die bestimmte Verwendung ein Wechselwirken mit weiteren Komponenten der verfahrenstechnischen Anlage zu ermöglichen.

2. Verfahren nach Anspruch 1, bei dem die Komponente (1) eine Package Unit (1) darstellt, die eine Mehrzahl von Subkomponenten umfasst und die im Rahmen einer Projektierung der verfahrenstechnischen Anlage als eine in sich abgeschlossene Einheit integriert werden kann.

3. Verfahren nach Anspruch 1 oder 2, bei dem die bestimmte Verwendung eines oder mehrere von der Komponente (1) herzustellende Produkte, oder einen oder mehrere, von der Komponente (1) durchführbare verfahrenstechnische Dienste, insbesondere ein Rühren, Temperieren oder Mischen, und/oder einen bestimmten Betriebsbereich der Komponente (1) betrifft.

4. Verfahren nach einem der vorangegangenen Ansprüche, bei dem die Informationen (13), die die Verwendung der Komponente (1) innerhalb der verfahrenstechnischen Anlage umfassen, in einem Datenspeicher der verfahrenstechnischen Anlage oder in einer cloudbasierten Umgebung in oder außerhalb der verfahrenstechnischen Anlage befindlich sind, wobei in dem Zertifikat eine Referenz auf diese Informationen (13) eingefügt ist.

5. Leitsystem für eine verfahrenstechnische Anlage, welches einen Engineering Station Server (7) umfasst, auf dem ein Engineering-Werkzeug computerimplementiert ist, welches zum Erstellen einer Automatisierung für Komponenten (1) der verfahrenstechnischen Anlage ausgebildet und vorgesehen ist, **dadurch gekennzeichnet, dass**
das Engineering-Werkzeug dazu ausgebildet ist, der Komponenten ein Zertifikat auszustellen und in das Zertifikat Informationen (13) oder eine Referenz auf Informationen (13) einzufügen, welche Informationen (13) eine bestimmte Verwendung der Komponente (1) innerhalb der verfahrenstechnischen Anlage umfassen, um der Komponente (13) ausschließlich für die bestimmte Verwendung ein Wechselwirken mit weiteren Komponenten (1) der verfahrenstechnischen Anlage zu ermöglichen.

6. Leitsystem für eine verfahrenstechnische Anlage, welches einen Engineering Station Server (7) umfasst, auf dem ein Engineering-Werkzeug computerimplementiert ist, welches zum Erstellen einer Automatisierung für Komponenten (1) der verfahrenstechnischen Anlage ausgebildet und vorgesehen ist,
**dadurch gekennzeichnet, dass**
das Engineering-Werkzeug dazu ausgebildet ist, in einen von der Komponente (1) zur Beantragung eines Zertifikats generierten Zertifikatsantrag Informationen (13) oder eine Referenz auf Informationen (13) einzufügen, welche Informationen (13) eine bestimmte Verwendung der Komponente (1) innerhalb der verfahrenstechnischen Anlage umfassen, um der Komponente (13) anhand des, basierend auf dem Zertifikatsantrag von einer Zertifizierungsstelle (10) der verfahrenstechnischen Anlage ausgestellten Zertifikats, das die im Zertifikatsantrag enthaltenen Informationen oder eine Referenz auf Informationen (13) enthält, ausschließlich für die bestimmte Verwendung ein Wechselwirken mit weiteren Komponenten (1) der verfahrenstechnischen Anlage zu ermöglichen.

7. Leitsystem nach Anspruch 5 oder 6, bei dem die Komponente (1) eine Package Unit (1) darstellt, die eine Mehrzahl von Subkomponenten umfasst und die im Rahmen einer Projektierung der verfahrenstechnischen Anlage als eine in sich abgeschlossene Einheit integriert werden kann.

8. Leitsystem nach einem der Ansprüche 5 bis 7, bei dem die bestimmte Verwendung eines oder mehrere von der Komponente (1) herzustellende Produkte, oder einen oder mehrere, von der Komponente (1) durchführbare verfahrenstechnische Dienste, insbesondere ein Rühren, Temperieren oder Mischen, und/oder einen bestimmten Betriebsbereich der Komponente (1) betrifft.

9. Leitsystem nach einem der Ansprüche 5 bis 8, bei dem die Informationen, die die Verwendung der Komponente (1) innerhalb der verfahrenstechnischen Anlage umfassen, in einem Datenspeicher der verfahrenstechnischen Anlage oder in einer cloudbasierten Umgebung in oder außerhalb der verfahrenstechnischen Anlage befindlich sind, wobei in dem Zertifikat eine Referenz auf diese Informationen (13) eingefügt ist.

10. Verwendung eines Leitsystems gemäß einem der Ansprüche 5 bis 9 zum Betrieb einer verfahrenstechnischen Anlage.

11. Verwendung nach Anspruch 10, bei der im Rahmen eines Erstellens oder einer Überarbeitung einer Automatisierung für Komponenten (1) einer verfahrenstechnischen Anlage bei einer beabsichtigten Verwendung einer der Komponenten in einem für die Komponente ausgestellten Zertifikat enthaltene Informationen (13) oder eine Referenz auf Informationen (13) dahingehend überprüft werden, ob eine bestimmte, im Rahmen der Automatisierung vorgesehene Verwendung der Komponente (1) innerhalb der verfahrenstechnischen Anlage erlaubt ist, und bei der die Komponente (1) für den Fall, dass die bestimmte Verwendung nicht erlaubt sein sollte, eine Verwendung der Komponente im Rahmen der Automatisierung verhindert wird.
